(19) Europäisches Patentamt
European Patent Office
Office européen des brevets

(11) Veröffentlichungsnummer: **0 374 635 A2**

(12) **EUROPÄISCHE PATENTANMELDUNG**

(21) Anmeldenummer: **89122669.8**

(51) Int. Cl.5: **C08G 77/448**

(22) Anmeldetag: **08.12.89**

(30) Priorität: **21.12.88 DE 3842931**
**02.02.89 DE 3903102**
**25.05.89 DE 3917041**

(43) Veröffentlichungstag der Anmeldung:
**27.06.90 Patentblatt 90/26**

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Freitag, Dieter, Dr.**
**Hasenheide 10**
**D-4150 Krefeld(DE)**
Erfinder: **Westeppe, Uwe, Dr.**
**Vogelskamp 72**
**D-4020 Mettmann(DE)**
Erfinder: **Jung, Alfred, Dr.**
**Bodelschwinghstrasse 12**
**D-4150 Krefeld 1(DE)**
Erfinder: **Horlacher, Peter, Dr.**
**Ginsterweg 4**
**D-7913 Senden(DE)**
Erfinder: **Weymans, Günther, Dr.**
**Karl-Arnold-Strasse 4**
**D-5090 Leverkusen 1(DE)**
Erfinder: **Grigo, Ulrich, Dr.**
**Michelsheide 9**
**D-4152 Kempen(DE)**
Erfinder: **Morbitzer, Leo, Dr.**
**Rungestrasse 50**
**D-5000 Köln 80(DE)**
Erfinder: **Idel, Karsten-Josef, Dr.**
**Am Schwarzkamp 38**
**D-4150 Krefeld(DE)**

(54) **Polydiorganosiloxan-Polycarbonat-Blockcokondensate auf Basis spezieller Dihydroxydiphenylcycloalkane.**

(57) Polydiorganosiloxan-Polycarbonat-Blockcopolymere auf Basis von Dihydroxydiphenylcycloalkanen der Formel (I)

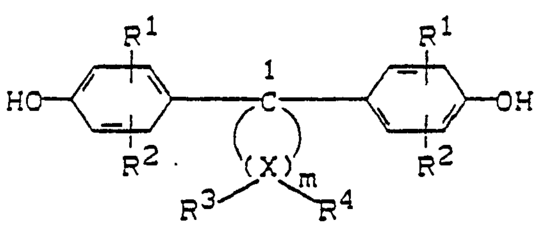

(I),

worin
$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl und $C_7$-$C_{12}$-Aralkyl, bevorzugt Phenyl-$C_1$-$C_4$-alkyl, insbesondere Benzyl,
m eine ganze Zahl von 4 bis 7, bevorzugt 4 oder 5, sind,
$R^3$ und $R^4$ für jedes X individuell wählbar, unabhängig voneinander Wasserstoff oder $C_1$-$C_{12}$-Alkyl
und
X Kohlenstoff bedeuten,
mit der Maßgabe, daß an mindestens einem Atom X $R^3$ und $R^4$ gleichzeitig Alkyl bedeuten,
mit mittlerem Molekulargewicht $M_w$ (Gewichtsmittel) von 10 000 bis 300 000, einem Gehalt an aromatischen

EP 0 374 635 A2

Carbonatstruktureinheiten von 75 bis 99,5 Gew.-% und einem Gehalt an Polydiorganosiloxanstruktureinheiten von 25 bis 0,5 Gew.-%.

## Polydiorganosiloxan-Polycarbonat-Blockcokondensate auf Basis spezieller Dihydroxydiphenylcycloalkane

Gegenstand der Erfindung sind thermoplastische Polydiorganosiloxan-Polycarbonat-Blockcopolymere auf Basis von Dihydroxydiphenylcycloalkanen der Formel (I)

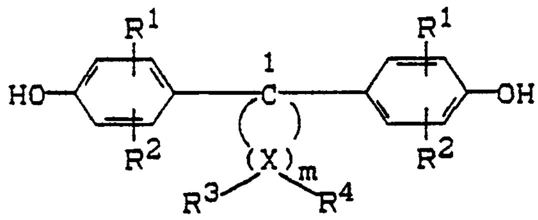

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl und $C_7$-$C_{12}$-Aralkyl, bevorzugt Phenyl-$C_1$-$C_4$-alkyl, insbesondere Benzyl,

m eine ganze Zahl von 4 bis 7, bevorzugt 4 oder 5, sind,

$R^3$ und $R^4$ für jedes X individuell wählbar, unabhängig voneinander Wasserstoff oder $C_1$-$C_{12}$-Alkyl und

X Kohlenstoff bedeuten,

mit der Maßgabe, daß an mindestens einem Atom X $R^3$ und $R^4$ gleichzeitig Alkyl bedeuten.

Bevorzugt sind in Formel I an 1-2 Atomen X, insbesondere nur an einem Atom X, $R^3$ und $R^4$ gleichzeitig Alkyl. Bevorzugter Alkylrest ist Methyl; die X-Atome in α-Stellung zu dem diphenylsubstituierten C-Atom (C-1) sind bevorzugt nicht mit Alkyl substituiert, dagegen ist die Alkyl-disubstitution in ß-Stellung zu C-1 bevorzugt. Besonders bevorzugt ist ein X-Atom in ß-Stellung dialkylsubstituiert und ein X-Atom in ß-Stellung monoalkylsubstituiert.

Besonders bevorzugte Dihydroxydiphenylcycloalkane der Formel (I) sind solche mit 5 und 6 Ring-C-Atomen im cycloaliphatischen Rest (m = 4 oder 5 in Formel I), beispielsweise Diphenole der Formeln

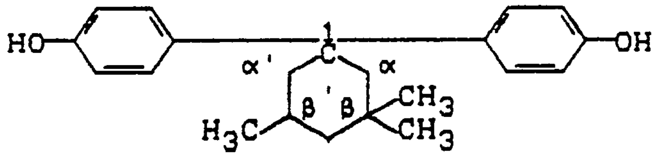

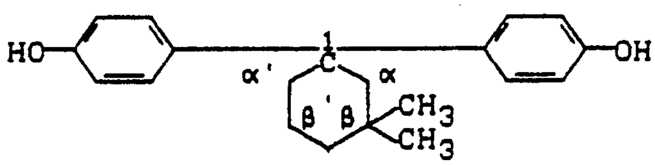

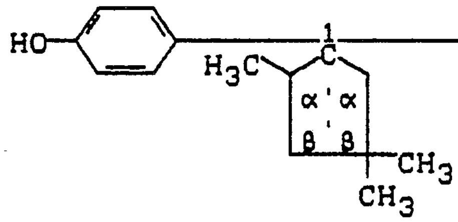

und

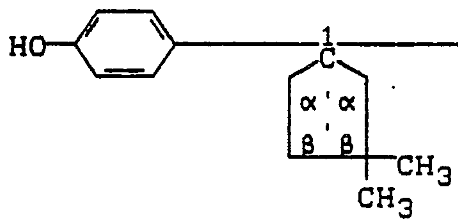

Die erfindungsgemäßen Polydiorganosiloxan-Polycarbonat-Blockcopolymeren zeichnen sich durch hohe Wärmeformbeständigkeit, Festigkeit, gute UV-Stabilität und Tieftemperaturzähigkeit aus.

Polydiorganosiloxan-Polycarbonat-Blockcopolymere sind grundsätzlich bekannt (vgl. US-PS 3 189 662, 3 419 634, DE-OS 3 334 782, 3 506 472, EP-A 122 535, 135 794).

Die erfindungsgemäßen thermoplastischen Polydiorganosiloxan-Polycarbonat-Blockcopolymere besitzen ein mittleres Molekulargewicht $\overline{M}w$ (Gewichtsmittel) von 10 000 bis 30 000, vorzugsweise von etwa 15 000 bis 80 000 (ermittelt in bekannter Weise durch Ultrazentrifugation oder Streulichtmessung), einen Gehalt an aromatischen Carbonat von 21 bis 99,5 Gew.-% und einen Gehalt an Polydiorganosiloxan von 79 bis 0,5 Gew.-%; sie können hergestellt werden aus

a) $\alpha,\omega$-Bishydroxyaryloxy-polydiorganosiloxanen mit einem Polymerisationsgrad Pn von 5 bis 200, vorzugsweise 20 bis 160, vorzugsweise solche der Formel (II),

b) Diphenolen der Formel (I) und gegebenenfalls der Formel (III), wobei Diphenole der Formel (I) 1 bis 100 Mol-%, vorzugsweise 10 bis 80 Mol-%, der genannten Diphenole ausmachen gegebenenfallls

c) Kettenabbrechern und gegebenenfalls

d) Verzweigern, durch Zweiphasengrenzflächenpolykondensation mit einem "Carbonatspender".

In einer bevorzugten Ausführungsform sind die erfindungsgemäßen thermoplastischen Polyorganosiloxan-Polycarbonat-Blockcopolymeren zusammengesetzt aus 75-99,5 Gew.-% aromatischem Polycarbonat und 25 bis 0,5 Gew.-% Polysiloxan.

In einer weiteren bevorzugten Ausführungsform ist die Zusammensetzung 21 bis 75 Gew.-% bevorzugt 30 bis 70 Gew.-% aromatisches Polycarbonat und 79 bis 25 Gew.-% bevorzugt 70 bis 30 Gew.-% Polysiloxan.

Die Diphenole, aus denen das Polycarbonat aufgebaut sind, können zu 100 % der Formel I entsprechen oder es können Mischungen mit Diphenolen der Formel III verwendet werden, in denen der Anteil an Diphenolen der Formel I 100 bis 1 Gew.-%, bevorzugt 100-30 Gew.-% und insbesondere bei hohen Polycarbonatgehalten 80-10 Gew.-%.

Geeignete $\alpha,\omega$-Bishydroxy-aryloxy-polydiorganosiloxane (a) sind z.B. aus US-PS 3 419 634 bekannt.

Bevorzugte $\alpha,\omega$-Bishydroxyaryloxy-polydiorganosiloxane sind solche der Formel (II):

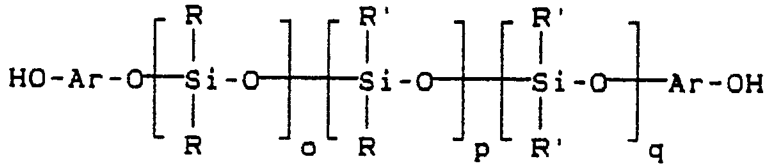 (II)

worin

Ar den Rest eines Diphenols der Formel (I) oder der Formel (III) ohne die beiden Hydroxylgruppen und

R und R' lineares Alkyl, verzweigtes Alkyl, Alkenyl, halogeniertes lineares Alkyl, halogeniertes verzweigtes Alkyl, Aryl oder halogeniertes Aryl, vorzugsweise Methyl bedeuten,
und.
die Anzahl der Diorganosiloxy-Einheiten n = o + p + q = 5 bis 200, vorzugsweise 20 bis 160, ist.

In Formel (II) sind die Reste R und die Reste R' unabhängig voneinander. Sie sind bevorzugt $C_1$-$C_{20}$-Alkyl, $C_2$-$C_6$-Alkenyl, $C_6$-$C_{14}$-Aryl. Halogeniert bedeutet teilweise oder vollständig chloriert, bromiert oder fluoriert. Besonders bevorzugt ist R und R' Methyl, Ethyl, Propyl, n-Butyl, tert.-Butyl, Vinyl, Phenyl, Naphthyl, Chlormethyl, Trifluorpropyl, Perfluorbutyl und Perfluoractyl.

In den Diphenolen der Formel (III)

HO-Ar°-OH (III)

sind Ar° gleiche oder verschiedene Arylenreste mit vorzugsweise 6 bis 30C-Atomen. Beispiele für Diphenole der Formel (III) sind:

Hydrochinon
Resorcin
Dihydroxydiphenyle
Bis-(hydroxyphenyl )-alkane
Bis-(hydroxyphenyl)-cycloalkane (ausgenommen die der Formel I)
Bis-(hydroxyphenyl)-sulfide
Bis-(hydroxyphenyl)-ether
Bis-(hydroxyphenyl)-sulfoxide
Bis-(hydroxyphenyl)-sulfone und
$\alpha,\omega$-Bis-(hydroxyphenyl)-diisopropylbenzole

sowie deren kernalkylierte und kernhalogenierte Derivate. Diese und weitere geeignete aromatische Dihydroxyverbindungen sind z.B. in den US-PS 3 028 365 und 2 999 846 und in den DE-OS 1 570 703, 2 036 052, 2 063 050, 2 211 957, der französischen Patentschrift 1 561 518 und in der Monographie "H. Schnell, Chemistry and Physics of Polycarbonates, Interscience Publishers, New York 1964" beschrieben.

Bevorzugte Diphenole der Formel (III) sind:

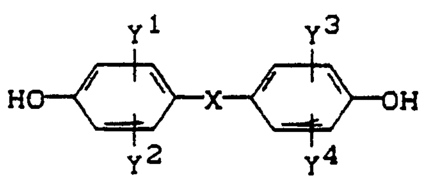

worin

X eine Einfachbindung, $-CH_2-$, $-C(CH_3)_2-$, O, S, $SO_2$,

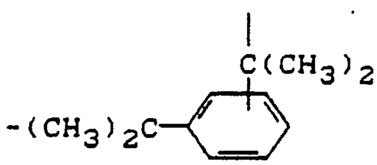

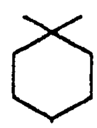

bedeuten und

$Y^1$ bis $Y^4$ gleich oder verschieden sind und Wasserstoff, $C_1$-$C_4$-Alkyl, vorzugsweise Methyl, oder Halogen, vorzugsweise Chlor oder Brom bedeuten.

Beispiele hierfür sind:

2,2-Bis-(4-hydroxyphenyl)-propan
1 ,1-Bis-(4-hydroxyphenyl)-cyclohexan
2,2-Bis-(3,5-dichlor-4-hydroxyphenyl)-propan
2,2-Bis-(3,5-dibrom-4-hydroxyphenyl)-propan
2,2-Bis-(3,5-dimethyl-4-hydroxyphenyl)-propan
Bis-(3,5-dimethyl-4-hydroxyphenyl)-methan und
Bis-(4-hydroxyphenyl)-sulfid.

Es können ein oder mehrere Diphenole der Formel (I) und gegebenenfalls daneben ein oder mehrere Diphenole der Formel (III) eingesetzt werden.

Diphenole der Formel (I) können in an sich bekannter Weise durch Kondensation von Phenolen der Formel (V)

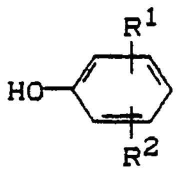

(V)

und Ketonen der Formel (VI)

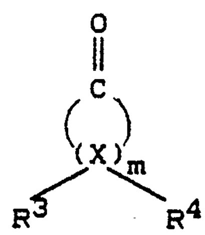

(VI)

hergestellt werden, wobei in den Formeln (V) und (VI) X, $R^1$, $R^2$, $R^3$, $R^4$ und m die für die Formel (I) angegebene Bedeutung haben. Sie sind in der deutschen Patentanmeldung P 3 832 396.0 beschrieben.

Als Kettenabbrecher (c) sind aromatische Verbindungen mit einer funktionellen Gruppe wie aromatische Säurehalogenide oder Phenole, insbesondere die gebräuchlichen Phenole wie p-tert.-Butylphenol, p-Chlorphenol, 2,4,6-Tribromphenol und Phenol in üblichen Mengen einsetzbar, die sich nach dem gewünschten Molekulargewicht der Blockcopolymeren bestimmen. Besonders bevorzugt sind als Kettenabbrecher Phenole der Formel (IV)

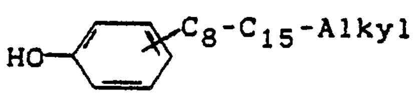

(IV).

Im allgemeinen werden 0,5 Mol-% bis 10,0 Mol-%, bezogen auf eingesetzte Diphenole, eingesetzt.

Als Verzweiger d) sind solche mit drei oder mehr als drei funktionellen Gruppen, insbesondere solche mit drei oder mehr als drei phenolischen Hydroxylgruppen einsetzbar, wobei die üblicherweise bekannten Mengen an Verzweiger, zwischen 0,05 und 2 Mol-%, bezogen auf eingebaute Diphenole, einzuhalten sind.

Einige der verwendbaren Verbindungen mit drei oder mehr als drei phenolischen Hydroxylgruppen sind beispielsweise 2,4-Bis-(4-hydroxyphenyl-isopropyl)-phenol, 2,6- bis-(2′-hydroxy-5′-methyl-benzyl)-4-methylphenol, 2-(4-Hydroxyphenyl)-2-(2,4-dihydroxyphenyl)-propan und 1,4-Bis-(4,4′-dihydroxytriphenyl-methyl)-benzol. Einige der sonstigen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Geeignete organische Lösungsmittel für die Zweiphasengrenzflächenpolykondensation sind für die Herstellung von aromatischen Polycarbonaten bekannt; Beispiele sind Methylenchlorid und Chlorbenzol.

Die Mengen an organischem Lösungsmittel (= organische Phase) werden vorzugsweise so gewählt, daß die Zweiphasengrenzflächenpolykondensation in 5 bis 20 %iger Lösung im organischen Lösungsmittel, vorzugsweise 10 bis 15 %iger Lösung abläuft.

Geeignete basische Verbindungen für die Bildung der wäßrigen alkalischen Phase sind z.B. LiOH, NaOH, KOH, $Ca(OH)_2$ und $Ba(OH)_2$.

Bei der Zweiphasengrenzflächenpolykondensation sind die Volumina von wäßrig-alkalischer Phase und gesamter organischer Phase vorzugsweise gleich.

Der pH-Wert der wäßrigen Phase liegt während der Reaktionen im allgemeinen zwischen pH 9 bis 14, vorzugsweise zwischen pH 12 bis 13.

Geeignete Katalysatoren für die Polykondensation nach dem Zweiphasengrenzflächenverfahren sind die für die Polycarbonatsynthese bekannten tertiären aliphatischen Aminkatalysatoren wie Trimethylamin, Triethylamin, Tri-n-propylamin, Tri-n-butylamin oder N-Ethylpiperidin; gegebenenfalls können auch die

bekannten quartären Ammoniumsalze wie beispielsweise Tetrabutylammoniumbromid eingesetzt werden.

Die Menge an Katalysator für die Zweiphasengrenzflächenpolykondensation variiert je nach eingesetztem Diphenol zwischen 0,2 bis 5 Mol-%, bei Einsatz von tetramethylsubstituierten Diphenolen zwischen 5 bis 10 Mol-%, bezogen jeweils auf die Gesamtmenge an Diphenolen (b).

Die Mengen von Diphenol (b) und $\alpha,\omega$-Bishydroxyaryloxypolydiorganosiloxan (a) richten sich nach dem gewünschten Gehalt an Poly(diorganosiloxan)-Einheiten im Blockcopolymeren. Die Umsetzung der Reaktanten ist normalerweise quantitativ.

Die $\alpha,\omega$-Bishydroxyaryloxypolydiorganosiloxane und der Kettenabbrecher können bei der Zweiphasengrenzflächenkondensation zusammen mit den Diphenolen (b) vor der Phosgeneinleitung zugegeben werden oder separat während oder nach der Phasgeneinleitung, in jedem Fall aber vor der Zugabe des Polykondensationskatalysators.

Als "Carbonatspender" für die Zweiphasengrenzflächenpolykondensation dienen in bekannter Weise Kohlensäure halogenide, insbesondere Kohlensäurechloride, wie Phosgen, $COBr_2$, oder die Bischlorkohlensäureester von Diphenolen in entsprechender Menge, wobei jeweils pro Mol Halogen-Kohlensäure-Gruppe weniger als 1/2 Mol Diphenol verwendet wird.

Die aromatischen thermoplastischen Blockcopolymeren können aus den Reaktionsmischungen genau wie aromatische Polycarbonate abgetrennt werden. Hierbei wird zunächst die organische, das Copolycarbonat gelöst enthaltende Phase abgetrennt, gewaschen und anschließend das Copolycarbonat durch Eindampfen der Lösung isoliert, wobei als Endstufe des Aufarbeitungsprozesses vorzugsweise ein Ausdampfextruder benutzt wird.

Die erfindungsgemäßen thermoplastischen Blockcopolymere können Alterungsschutzmittel enthalten, die die Stabilität der Verfahrensprodukte wesentlich erhöhen. Zur Modifizierung der erfindungsgemäßen Produkte können z.B. Ruß, Kieselgur, Kaolin, Tone, $CaF_2$, $CaCO_3$, Aluminiumoxide, Glasfasern und anorganische Pigmente sowohl als Füllstoffe als auch als Nukleierungsmittel zugesetzt werden. Ebenso können sie die für Polycarbonat üblichen Entformungsmittel, wie z.B. Glycerinstearat enthalten sein.

Die erfindungsgemäßen Polydiorganosiloxan-Polycarbonat-Blockcopolymere sind thermoplastische Formmassen, die überall anwendbar sind, wo ihre wesentlichen Eigenschaften, wie hohe Wärmefarmbeständigkeit, Festigkeit, Zähigkeit und UV-Stabilität gefordert werden.

Sie können zur Herstellung von Formkörpern jeder Art nach bekannten Verfahren verwendet werden. Insbesondere können Formkörper durch Extrusion oder Spritzguß hergestellt werden.

Beispiele für herstellbare Formkörper sind Karosserieteile und Gehäuseteile, z.B. für elektrische Geräte und Apparaturen wie Haushaltsgeräte, Bauplatten, Folien und Membranen.

Die Kerbschlagzähigkeit wurde in Anlehnung an ISO R 180 an Flachstäben (80 mm x 10 mm x 4 mm) ermittelt; die Wärmeformbeständigkeit nach Methode Vicat (B) gemäß DIN 53 460/150 306.

Die Speichermodulwerte der Beispiele 8 und 9 wurden Schubmodulkurven, die mit einem Rheometrics Dynamic Analyser erhalten wurden, entnommen. Das Gerät arbeitet mit einer erzwungenen Torsionsschwingung mit einer Frequenz von 1 Hz.

Die Shore Härten A und D wurden nach DIN 53 505/150 868 bestimmt.

## Beispiele

### Beispiel 1: Herstellung des Bisphenols (I)

In einem 1-Liter-Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 bis 30 °C mit trockenem HCl-Gas gesättigt. Zu dieser Lösung werden innerhalb von 3 Stunden eine Lösung von 1,5 Mol (210 g) Dihydroisophoran (3,3,5-Trimethyl-cyclohexan-1-on) und 1,5 Mol (151 g) Phenol zugetropft, wobei weiterhin HCl-Gas durch die Reaktionslösung geleitet wird. Nach beendeter Zugabe leitet man für weitere 5 Stunden HCl-Gas ein. Man läßt 8 Stunden bei Zimmertempertur nachreagieren. Anschließend wird das überschüssige Phenol durch Wasserdampfdestillation entfernt. Der verbleibende Rückstand wird zweimal mit Petrolether (60-90) und einmal mit Methylenchlorid heiß extrahiert und abfiltriert.

Ausbeute: 370 g

Schmelzpunkt: 205 - 207 °C

### Beispiel 2

14,73 g (0,048 Mol) Bisphenol (I), 97,11 g (0,425 Mol) Bisphenol A, 33,7 g (0,84 Mol) NaOH und 1916,25 g Wasser werden in einer Inertgas-Atmosphäre unter Rühren gelöst. Dann fügt man eine Lösung von 6,82 g des Polydimethylsiloxan-Blocks (Pn = 73) mit Bisphenol A-Endgruppen (= 5 Gew.-% $SiMe_2O$) und 1,152 g (12,25 mmol) Phenol in 1250 g Methylenchlorid zu. In die gut gerührte Lösung wurden bei pH 12 bis 13 und 21 bis 25 °C 79,5 g (0,80 Mol) Phosgen eingeleitet. Danach werden 0,68 ml Ethylpiperidin zugegeben und noch 45 min. gerührt. Die bisphenolatfreie wäßrige Phase wird abgetrennt, die organische Phase, nach Ansäuern mit Phosphorsäure, mit Wasser neutral gewaschen und vom Lösungsmittel befreit.

## Beispiel 3

29,45 g (0,095 Mol) Bisphenol (I), 75,3 g (0,33 Mol) Bisphenol A, 33,7 g (0,84 Mol) NaOH und 1916,25 g Wasser werden in einer Inertgasatmosphäre unter Rühren gelöst. Dann fügt man eine Lösung von 6,8 g des Polydimethylsiloxan-Blocks (Pn = 73) mit Bisphenol-A-Endgruppen 5 Gew.-% $SiMe_2O$) und 1,035 g (11,0 mmol) Phenol in 1250 g Methylenchlorid zu. In die gut gerührte Lösung wurden bei pH 12 bis 13 und 21 bis 25 °C 79,5 g (0,80 Mol) Phosgen eingeleitet. Danach werden 0,68 ml Ethylpiperidin zugegeben und noch 45 min. gerührt. Die bisphenolatfreie wäßrige Phase wird abgetrennt, die organische Phase nach Ansäuern mit Phosphorsäure, mit Wasser neutral gewaschen und vom Lösungsmittel befreit.

## Beispiel 4 (Vergleich)

43,13 g (0,19 Mol) Bisphenol A, 13,5 g (0,34 Mol) NaOH und 766,5 g Wasser werden in einer Inertgas-Atmosphäre unter Rühren gelöst. Dann fügt man eine Lösung von 2,73 g des Polydimethylsiloxan-Blocks (Pn = 73) mit Bisphenol A-Endgruppen (= 5 Gew.-% $SiMe_2O$) und 0,34 g (3,6 mmol) Phenol in 500 g Methylenchlorid zu. In die gut gerührte Lösung wurden bei pH 12 bis 13 und 21 bis 25 °C 31,7 g (0,32 Mol) Phosgen eingeleitet. Danach werden 0,27 ml Ethylpiperidin zugegeben und noch 45 min. gerührt. Die bisphenolatfreie wäßrige Phase wird abgetrennt, die organische Phase, nach Ansäuern mit Phosphorsäure, mit Wasser neutral gewaschen und vom Lösungsmittel befreit.

## Beispiel 5 (Vergleich)

6,2 g (0,02 Mol) Bisphenol (I), 18,24 g (0,08 Mol) Bisphenol A, 24,0 g (0,6 Mol) NaOH und 270 g Wasser werden in einer Inertgasatmosphäre unter Rühren gelöst und 0.3384 g (36 mmol) Phenol in 250 g Methylenchlorid hinzugegeben. In die gut gerührte Lösung wurden bei pH 12 bis 13 und 21 bis 25 °C 19,8 g (0,20 Mol) Phosgen eingeleitet. Danach werden 0,1 ml Ethylpiperidin zugegeben und noch 45 Minuten gerührt. Die Bisphenol-freie wässrige Phase wird abgetrennt und die organische Phase nach Ansäuern mit Phosphorsäure, mit Wasser neutral gewaschen und vom Lösungsmittel befreit.

Tabelle I

| Tabellarischer Eigenschaftsvergleich | | | | |
|---|---|---|---|---|
| Eigenschaften | Beispiel 2 | Beispiel 3 | Beispiel 4 (Vergleich) | Beispiel 5 (Vergleich) |
| rel. Lösungsviskosität | 1.306 | 1.296 | 1.298 | 1.301 |
| Siloxanblocklänge | 73 | 73 | 73 | 0 |
| Kerbschlagzähigkeit nach Izod (4 mm) | | | | |
| 20 °C (kJ/m²) | 48,8* | 33,8* | 96* | 10 |
| -20 °C (kJ/m²) | 31,1* | 17,6 | - | - |
| -40 °C (kJ/m²) | 22,2 | 14,5 | - | - |
| Wärmeformbeständigkeit | | | | |
| Vicat (VST B/120) (°C) | 157 | 162 | 148 | 173 |

*) Zähbruch

Beispiel 6

62,99 g (0,203 Mol) Bisphenol (I,1), 24 g (0,105 Mol) Bisphenol A, 54 g (1,35 Mol) NaOH und 3070 g Wasser werden in einer Inertgas Atmosphäre unter Rühren gelöst. Dann fügt man eine Lösung von 109,6 g des Polydimethylsiloxan-Blocks (Pn = 32) mit Bisphenol A-Endgruppen ( = 45 Gew.-% $SiMe_2O$) und 1500 ml Methylenchlorid zu. In die gut gerührte Lösung wurden bei pH 12 bis 13 und 21 bis 25° C 126,8 g (1.28 Mol) Phosgen eingeleitet. Danach werden 1,12 ml Ethylpiperidin zugegeben und noch 45 min. gerührt. Die bisphenolatfreie wäßrige Phase wird abgetrennt, die organische Phase, nach Ansäuern mit Phosphorsäure, mit Wasser neutral gewaschen und vom Lösungsmittel befreit.
Shore Härte A: 86
Shore Härte D: 42

Beispiel 7

32,98 g (0,106 Mol) Bisphenol (I,1), 15,6 g (0,39 Mol) NaOH und 519,1 g Wasser werden in einer Inertgas-Atmosphäre unter Rühren gelöst. Dann fügt man eine Lösung von 17,45 g des Polydimethylsiloxan-Blocks (Pn = 78) mit Bisphenol (I,1)-Endgruppen (= 40 Gew.-% $SiMe_2O$) und 0,271 g (2,88 mMol) Phenol in 375 ml Methylenchlorid zu. In die gut gerührte Lösung wurden bei pH 12 bis 13 und 21 bis 25° C 25,33 g (0,256 Mol) Phosgen eingeleitet.

Danach werden 0,22 ml Ethylpiperidin zugegeben und noch 545 min. gerührt. Die bisphenolatfreie wäßrige Phase wird abgetrennt, die organische Phase, nach Ansäuern mit Phosphorsäure, mit Wasser neutral gewaschen und vom Lösungsmittel befreit.
Tg (DSC): 226,2° C

Beispiel 8

12,46 g (0,04 Mol) Bisphenol (I,1), 13,5 g (0,34 Mol) NaOH und 766,5 g Wasser werden in einer Inertgas-Atmosphäre unter Rühren gelöst. Dann fügt man eine Lösung von 41,12 g des Polydimethylsiloxan-Blocks (Pn = 10) mit Bisphenol A-Endgruppen (= 45 Gew.-% $SiMe_2O$) und 0,207 g (2,2 mMol) Phenol in 375 ml Methylenchlorid zu, In die gut gerührte Lösung wurden bei pH 12 bis 13 und 21 bis 25° C 31,7 g (0,32 Mol) Phosgen eingeleitet. Danach werden 0,27 ml Ethylpiperidin zugegeben und noch 45 min. gerührt. Die bisphenolatfreie wäßrige Phase wird abgetrennt, die organische Phase, nach Ansäuern mit Phosphorsäure, mit Wasser neutral gewaschen und vom Lösungsmittel befreit,

| Temperatur (° C) | Speichermodul G′ (MPa) |
|---|---|
| 0 | 130 |
| 40 | 88 |
| 100 | 32 |

Shore Härte D: 45

Beispiel 9 (Vergleich)

11,04 g (0,0484 Mol) Bisphenol A, 13,5 g (0,34 Mol) NaOH und 766,5 g Wasser werden in einer Inertgas-Atmosphäre unter Rühren gelöst. Dann fügt man eine Lösung von 36,86 g des Polydimethylsiloxan-Blocks ,Pn = 10) mit Bisphenol A-Endgruppen (= 45 Gew.-% $SiMe_2O$) und 0,377 g (4,02 mMol) Phenol in 375 ml Methylenchlorid zu. In die gut gerührte Lösung wurden bei pH 12 bis 13 und 21 bis 25° C 31,8 g (0,32 Mol) Phosgen eingeleitet. Danach werden 0,28 ml Ethylpiperidin zugegeben und noch 45 min. gerührt. Die bisphenolatfreie wäßrige Phase wird abgetrennt, die organische Phase, nach Ansäuern mit Phosphorsäure, mit Wasser neutral gewaschen und vom Lösungsmittel befreit.

| Temperatur (°C) | Speichermodul G' (MPa) |
|---|---|
| 0 | 3,8 |
| 40 | 1,3 |
| 100 | - |

Shore Härte A: 50

**Ansprüche**

1. Polydiorganosiloxan-Polycarbonat-Blockcopolymere auf Basis von Dihydroxydiphenylcycloalkanen der Formel (I)

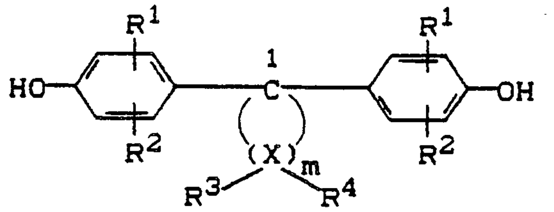

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl und $C_7$-$C_{12}$-Aralkyl, bevorzugt Phenyl-$C_1$-$C_4$-alkyl, insbesondere Benzyl,

m eine ganze Zahl von 4 bis 7, bevorzugt 4 oder 5, sind,

$R^3$ und $R^4$ für jedes X individuell wählbar, unabhängig voneinander Wasserstoff oder $C_1$-$C_{12}$-Alkyl

und

X Kohlenstoff bedeuten,

mit der Maßgabe, daß an mindestens einem Atom X $R^3$ und $R^4$ gleichzeitig Alkyl bedeuten,

mit mittlerem Molekulargewicht $\overline{M}_w$ (Gewichtsmittel) von 10 000 bis 300 000, einem Gehalt an aromatischen Carbonat von 21 bis 99,5 Gew.-% und einem Gehalt an Polydiorganosiloxan von 79 bis 0,5 Gew.-%.

2. Polyorganosiloxan-Polycarbonat-Blockcopolymere gemäß Anspruch 1, in denen der Polysiloxan-Block ein Rest eines α,ω-Bishydroxyaryloxypolysiloxans mit einem Polymerisationsgrad von 5 bis 200 ist.

3. Polyorganosiloxan-Polycarbonat-Blockcopolymere gemäß Anspruch 1, in denen der Polysiloxan-Block von einem α,ω-Bishydroxyaryloxypolysiloxan der Formel (II)

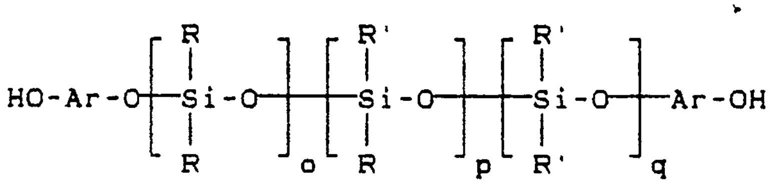

(II)

abgeleitet ist, worin

Ar den Rest eines Diphenols der Formel (I) oder der Formel (III) ohne die beiden Hydroxylgruppen und

R und R' lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten,

und

die Anzahl der Diorganosiloxy-Einheiten n = o + p + q = 5 bis 200, vorzugsweise 20 bis 160, ist.